# EUROPÄISCHE PATENTSCHRIFT

(11) **EP 2 426 474 B1**
(45) Veröffentlichungstag und Bekanntmachung des Hinweises auf die Patenterteilung: **27.04.2016**
(21) Anmeldenummer: 11178603.4
(22) Anmeldetag: 24.08.2011
(51) Int. Cl.: G01M 10/00, B01D 19/00

(54) **Luftabscheidevorrichtung für Wasserumlaufkanäle**
Air extraction device for water circulation channels
Dispositif de séparation de l'air pour canaux de déviation d'eau

(30) Priorität: 07.09.2010 DE 102010037383
(43) Veröffentlichungstag der Anmeldung: 07.03.2012
(73) Patentinhaber: TZ Technisches Zentrum Entwicklungs- & Handelsgesellschaft mbH, 04229 Leipzig (DE)
(72) Erfinder: Fitzner, Wigand, 04207 Leipzig (DE); Dr. Döge, Klaus, 01279 Dresden (DE)
(74) Vertreter: Kaufmann, Sigfrid

(56) Entgegenhaltungen:
- DD-A7- 301 361
- DE-A1- 1 619 926
- DE-A1- 2 105 551
- DE-C1- 3 419 159
- ES-A2- 2 081 234
- GB-A- 451 905
- SU-A1- 589 561
- US-A- 2 713 973
- US-A- 3 195 294

## Beschreibung

Die Erfindung betrifft eine Vorrichtung zur Abscheidung von Luftblasen in Wasserumlaufkanälen. Die Vorrichtung eignet sich insbesondere für einen Einsatz auf der Abströmseite der Messstrecke der Wasserumlaufkanäle, sie kann jedoch auch ohne Weiteres an anderen Stellen, wie z.B. vor den abströmseitigen Krümmern im Rückströmkanal, eingesetzt werden. Mit der Luftabscheidevorrichtung werden hohe Gasabscheidungsraten erreicht; sie kann zudem kompakt ausgeführt und ohne zusätzliche Pumpen betrieben werden.

Bei Wasserumlaufkanälen ohne Luftabscheidevorrichtungen bildet sich am Ende der Messstrecke, kurz vor der Stelle, an der der Wasserstrom zur Umlenkung und Einleitung in den Rückströmkanal wieder in den geschlossenen Kanal eintritt, abhängig von der Wassergeschwindigkeit (Froude-Zahl) und den geometrischen Verhältnissen im Wasserumlaufkanal, entweder ein Wasserschwall aus, der zusätzliche Luft in die Wasserströmung einbringt, oder die von den Krümmern ausgehende Deformation der Geschwindigkeitsverteilung bewirkt eine Absenkung des Wasserspiegels, was ebenfalls dazu führt, dass viel Luft mitgerissen und in den Wasserstrom eingemischt wird.

Aus dem Stand der Technik sind verschiedene Lösungen bekannt, mit denen die sich ständig bildenden Luftblasen aus Wasserumlaufkanälen abgeschieden werden können.

So ist in der Literatur ein Umlaufkanal beschrieben, bei dem der gesamte Wasserstrom nach dem Durchfließen der Messstrecke durch eine sog. Beruhigungsstrecke von 25 m Länge geleitet wird (Hansa-Schifffahrt-Schiffbau-Hafen-105, Jg. 1968 Sondernummer SG, Nov., Seite 2006-2010).

Die DE 2 105 551 A beschreibt einen Nebenschlusskreis mit freier Oberfläche und eigener Pumpe in Kombination mit einem Diffusor hinter einer zugehörigen Messstrecke eines Wasserumlaufkanals.

Die EP 0 797 087 A2 beschreibt eine Einrichtung zum Ausscheiden von Luftblasen in Wasserumlaufkanälen mit freier Wasseroberfläche an einer zugehörigen Messstrecke, bei der die oberste Wasserschicht durch eine Scheide vom Hauptstrom abgetrennt und einer Beruhigungszone zugeführt wird, während der mit einem Fangsieb versehene Hauptstrom durch einen Krümmer nach unten abgelenkt wird.

Die DD 301 361 A7 beschreibt eine Auffangeinrichtung für Umlaufwasserkanäle, wobei von einem umlaufenden Wasserstrom ein Teil einer gashaltigen Wasserschicht abgetrennt, entgast und wieder dem Hauptstrom zugeführt wird, wobei die aus einer zugehörigen Messstrecke kommende Strömung durch eine Schneide in einen Kanal gelangt, in einem Diffuser verzögert und in vertikale Richtung umgelenkt wird.

In DE 21 05 551 A1 und EP 0 797 087 A2 wird vorgeschlagen, die oberste Wasserschicht, die den höchsten Gehalt an Luftblasen aufweist, vom Hauptstrom abzutrennen, das abgetrennte Wasser durch eine vergleichsweise lange Beruhigungsstrecke zu leiten, und anschließend wieder in den Umlaufkanal zurückzuführen.

Der Bau und Betrieb der Beruhigungsstrecken ist jedoch platz- und kostenintensiv. Nachteilig ist auch, dass das über die Beruhigungsstrecke geleitete Wasser in den Wasserumlaufkanal zurückgepumpt werden muss; die hierzu benötigten Pumpen führen zu einer weiteren Erhöhung der Anschaffungs- und Betriebskosten der Wasserumlaufkanäle.

In DE 20 2007 016 595 U1 ist eine Vorrichtung zur Gasabscheidung für Wasserumlaufkanäle offenbart, die mit einer Absaugkammer und einer an diese angeschlossenen Wirbelkammer ausgestattet ist. Über die Absaugkammer wird dem Wasserumlaufkanal Wasser mit einem hohen Luftanteil entnommen, in der Wirbelkammer entgast und mittels einer Pumpe wieder in den Wasserumlaufkanal zurück gefördert.

Mit der Vorrichtung können selbst bei einem variierenden Lufteintrag hohe Gasabscheidungsraten erzielt werden. Der Betrieb der Wirbelkammer und der Pumpe ist jedoch mit vergleichsweise hohen Energiekosten verbunden.

Die GB 451 905 A beschreibt eine Vorrichtung zum Abseparieren von Gas aus einer in einem Rohr strömenden gashaltigen Flüssigkeit, wobei an der Oberseite des Rohres Öffnungen vorgesehen sind, durch welche hindurch Gas aus der Flüssigkeit in eine Dampfabführleitung entweichen und abgeführt werden kann.

Die ES 2 081 234 A2 beschreibt einen Fahrzeug-Kühler, wobei mittels eines von oben her in eine Flüssigkeitsleitung hineinragenden Leitblechs eine obere, gashaltige Flüssigkeitsschicht umgelenkt wird.

Die US 2 713 973 A beschreibt eine Vorrichtung für Heizsysteme, wobei eine gasreiche Wasserströmung durch eine Entgasungskammer geleitet wird und mittels einer Leitblechanordnung eine gasreiche obere Wasserschicht vom Hauptstrom abgetrennt und zum oberen Bereich der Entgasungskammer gelenkt wird.

Die SU 589 561 A1 beschreibt eine Vorrichtung zum Abseparieren von Erdgas aus Erdöl, wobei die Vorrichtung eine geneigt verlaufende, perforierte stromaufwärtige Scheidewand und eine sich an dieselbe anschließende, horizontal verlaufende perforierte stromabwärtige Scheidewand sowie zwei vertikal verlaufende perforierte Trennwände aufweist, die in einer Rohrleitung angeordnet sind.

Die US 3 195 294 A beschreibt ein Kühlsystem, wobei an der Oberseite einer Kühlflüssigkeitsleitung eine Gasauslassöffnung vorgesehen ist.

Die DE 34 19 159 C1 beschreibt einen Flüssigkeits-Entgaser, wobei in einem Leitungsrohr strömende gasreiche Flüssigkeit via ein von oben her an das Leitungsrohr angesetztes Abzweigrohr und ein Absaugrohr entgast wird.

Aufgabe der Erfindung ist es, die Nachteile des Standes der Technik zu beseitigen. Insbesondere soll der Betrieb der Luftabscheidevorrichtung mit einem geringen Energieeinsatz möglich sein. Darüber hinaus soll sie bei Strömungsgeschwindigkeiten bis 2 m/s ohne Pumpe betreibbar und kompakt aufgebaut sein sowie hohe Gasabscheidungsraten gewährleisten.

Diese Aufgabe wird erfindungsgemäß durch die Merkmale des Anspruchs 1 gelöst; vorteilhafte Ausgestaltungen der Erfindung ergeben sich aus den Ansprüchen 2 bis 7.

Nach Maßgabe der Erfindung besteht die Luftabscheidevorrichtung aus einer Luftabscheidewanne, deren Boden unterhalb des Wasserspiegels (bzw. unterhalb des Wasserniveaus, falls das Wasser in einem geschlossenen Kanal geführt wird) des Wasserumlaufkanals angeordnet ist. Der Boden oder zumindest ein Teil des Bodens der Luftabscheidewanne ist perforiert, d.h. mit Durchbrüchen versehen, die bevorzugt kreisrund sind oder die Form von Langlöchern haben. Dabei sind die Größe der Durchbrüche und ihre Anordnung so gewählt, dass beim Betrieb des Wasserumlaufkanals im stromaufwärts liegenden Bereich des perforierten Bodens Wasser (hoher Luftanteil) nach oben aus dem Wasserumlaufkanal heraus und in die Luftabscheidewanne hinein gedrückt wird, während in dem sich daran anschließenden (stromabwärts liegenden) Bereich des perforierten Bodens Wasser nach unten aus der Luftabscheidewanne heraus zurück in den Hauptwasserstrom des Wasserumlaufkanals gesogen wird. Der Fluss des Wassers mit hohem Luftanteil in die Luftabscheidewanne und der Rücktransport des in der Luftabscheidewanne entgasten Wassers erfolgt allein unter dem Einfluss der Schwerkraft (statische Kräfte/Druckdifferenzen) und aufgrund von strömungsdynamischen Effekten (Bernoulli; dynamische erzeugte Kräfte/Druckdifferenzen); für den Betrieb der Luftabscheidevorrichtung sind somit prinzipiell keine Pumpen erforderlich.

Das Wasser bewegt sich in der Luftabscheidewanne mit sehr kleinen Geschwindigkeiten, sodass die im Wasser eingeschlossenen Luftblasen ausreichend Zeit haben, um aufzusteigen und aus dem Wasser auszutreten. Dies führt dazu, dass das aus der Luftabscheidewanne abgeführte Wasser praktisch frei von Luftblasen ist; es werden hohe Gasabscheidungsraten erreicht.

Eine besonders einfach aufgebaute und effektive Luftabscheidevorrichtung wird durch ein Wasserleitelement gewährleistet, das sich über die gesamte Breite des Wasserumlaufkanals erstreckt und aus zwei ebenen, zum Wasserspiegel parallelen Bereichen besteht. Die beiden ebenen Bereiche sind durch einen Übergangsbereich miteinander verbunden. Am einfachsten lässt sich das Wasserleitelement durch Biegen oder Formen einer einzigen zusammenhängenden dünnen Platte bzw. Tafel herstellen. Das seitliche Profil des Wasserleitelements vollzieht einen "S-Schlag", d.h. es hat die Form einer Stufe, wobei die Stufe stark gerundete "Ecken" aufweist und nicht wie üblich rechtwinkelig, sondern in einem flachen Winkel von 20° bis 40° verläuft.

Das Wasserleitelement ist so im Wasserumlaufkanal angeordnet, dass sich aus Sicht der Strömung die Unterkante des ersten ebenen Bereichs oberhalb des Wasserspiegels der Hauptströmung befindet. Die beiden Seitenkanten des Wasserleitelements sind, z.B. mittels Schweißens, Klebens oder mittels Dichtungen, gasdicht mit den Wänden des Wasserumlaufkanals verbunden.

Der erste ebene Bereich und der Übergangsbereich (Unterseite) bilden mit den Wänden des Wasserumlaufkanals einen geschlossenen Kanal aus, der die gesamte Hauptströmung (und dessen Wasserniveau) nach unten lenkt und gleichzeitig eine mit einer Erhöhung der Strömungsgeschwindigkeit verbundene Verengung des Strömungsquerschnitts bewirkt. Bevorzugt ist das Wasserleitelement aus demselben Material wie der Wasserumlaufkanal gefertigt.

Der Übergangsbereich (Oberseite) und der zweite ebene Bereich, der zumindest in einem Teilabschnitt perforiert ist, bilden mit den Wänden des Wasserumlaufkanals als Seitenwänden und dem Boden die Luftabscheidewanne. Aufgrund des dynamischen Zu- und Abströmens in die/aus der Luftabscheidewanne füllt sich die Luftabscheidewanne mit Wasser, wobei der Wasserspiegel in der Luftabscheidewanne ein bis ca. 20 cm niedrigeres Niveau aufweist, als der Wasserspiegel der Hauptströmung in der Messstrecke.

Besonders vorteilhaft kann die Luftabscheidevorrichtung für Wasserumlaufkanäle auf der Abströmseite der Messstrecke eingesetzt werden, wenn der perforierte Boden der Luftabscheidewanne nahe der Umlaufkrümmer endet, d.h., sich ca. 1 bis 50 cm vor der Stelle befindet, an der der erste Umlenkkrümmer beginnt. Durch den S-Schlag des Wasserleitelements wird das auf die Luftabscheidewanne zuströmende Wasser nach unten gelenkt und gleichzeitig wird der Strömungsquerschnitt verringert. Bedingt durch hydrostatische (Senkung des Wasserniveaus) und strömungsdynamische Kräfte (Bernoulli-Effekt) wird in dem stromaufwärts liegenden Teil des perforierten Bodens Wasser in die Luftabscheidewanne gedrückt. Im stromabwärts liegenden Teil des perforierten Bodens tritt eine von den Umlenkkrümmern verursachte Saugwirkung auf, die ein Zurückströmen des Wassers aus der Luftabscheidewanne in den Wasserumlaufkanal bewirkt.

Die erfindungsgemäße Luftabscheidevorrichtung kann jedoch auch, bevorzugt vor den abströmseitigen Umlenkkrümmern, im Rückströmkanal eingesetzt werden. Hierzu muss die Luftabscheidewanne mittels einer Abdeckung verschlossen (=Luftabscheidekammer) und mit einer Absaugeinrichtung ausgestattet werden, mit der das Wasser-Luft-Gemisch aus der Luftabscheidekammer abgesaugt werden kann. Neben dem Absaugen von Luft, kann die Absaugeinrichtung auch dazu genutzt werden, die Druckverhältnisse in der Luftabscheidekammer aktiv zu beeinflussen, sodass es prinzipiell möglich wird, die Luftabscheidevorrichtung an beliebigen Stellen (nicht im Bereich der Umlenkkrümmer) im Wasserumlaufkanal einzusetzen.

Bei Strömungsgeschwindigkeiten bis zu 2 m/s wird der perforierte Bereich des Bodens der Luftabscheidewanne so groß gewählt, dass sich ein stationärer Wasserspiegel in der Luftabscheidewanne einstellt, der so hoch ist, dass ein Ansaugen von Luft über den perforierten Boden im stromabwärts liegenden Teil der Wanne verhindert wird. Die Voraussetzung für die Bildung eines stationären Wasserspiegels ist, dass der Volumenstrom des stromaufwärts in die Luftabscheidewanne strömenden Wassers gleich dem stromabwärtigen Volumenstroms des aus der Luftabscheidewanne gesaugten Wassers ist.

Gute Ergebnisse werden mit perforierten Bereichen erzielt, die sich über die gesamte Breite des Wasserumlaufkanals erstrecken und die eine Länge von 0,5 bis 2 m haben, wobei der Anteil der Durchbrüche zur geschlossenen Fläche ca. 30 % beträgt, die Durchbrüche bevorzugt kreisförmig sind und einen Durchmesser von 0,5 bis 3 cm haben.

Für Strömungsgeschwindigkeiten zwischen 2 m/s und 2,5 m/s kann ein Ansaugen von Luft über die Wanne nicht allein durch die Ausgestaltung der Luftabscheidewanne verhindert werden, sondern es muss, um den Wasserspiegel ("künstlich") weiter zu erhöhen und somit das Ansaugen von Luft zu minimieren, über einen Einlass zusätzliches Wasser in die Luftabscheidewanne geleitet werden. Hierzu ist zwar eine Pumpe mit kleiner Leistung erforderlich, die Luftabscheidevorrichtung kann dann jedoch in allen gängigen Wasserumlaufkanälen (Ruder-Wasserumlaufkanäle ausgeschlossen) betrieben werden.

Der Wasserspiegel in der Luftabscheidewanne kann auch mechanisch durch ein perforiertes Blech bzw eine perforierte Platte, das/die auf Boden der Luftabscheidewanne liegt und in Längsrichtung des Blechs/der Platte (also in und entgegen der Strömungsrichtung) verschoben wird, reguliert werden.

Aus Sicherheitsgründen, insbesondere wenn es vorgesehen ist, dass sich in den Wasserumlaufkanälen Personen (Sportler, Schwimmer) aufhalten, müssen auf der Abströmseite der Messstrecke Schutzgitter, die maximal einen lichten Abstand von ca. 80 mm zueinander haben, verwendet werden. Hierzu werden Schutzprofile, die sich über die gesamte Breite des Wasserumlaufkanals erstrecken, in Strömungsrichtung vor der Luftabscheidewanne angeordnet, wobei bevorzugt Schutzprofile mit einem tropfenförmigen Querschnitt eingesetzt werden, um die durch die Schutzprofile verursachten Ablösungen möglichst gering zu halten. Um ein starkes Schwingen der Schutzprofile zu vermeiden, ist eine vertikale Verstrebung der Schutzprofile vorgesehen. Der Einsatz von mehreren Verstrebungen würde zwar die Schwingungen weiter reduzieren, jedoch zur Bildung zusätzlicher Ablösungen im Wasserumlaufkanal und zusätzlichem Lufteintrag führen. In Strömungsrichtung sind die Schutzprofile beweglich und über Gummidämpfer abgestützt, um die bei Unfällen auf Personen wirkenden Aufprallkräfte zu verkleinern.

Nachfolgend wird die Erfindung anhand von zwei Ausführungsbeispielen und den Figuren 1 bis 3 näher erläutert; hierzu zeigen in seitlicher Schnittdarstellung:
- Fig. 1: eine in der Messstrecke eines Wasserumlaufkanals angeordnete Luftabscheidevorrichtung;
- Fig. 2: den Boden einer Luftabscheidewanne;
- Fig. 3: eine im Rückströmkanal eines Wasserumlaufkanals angeordnete Luftabscheidevorrichtung.

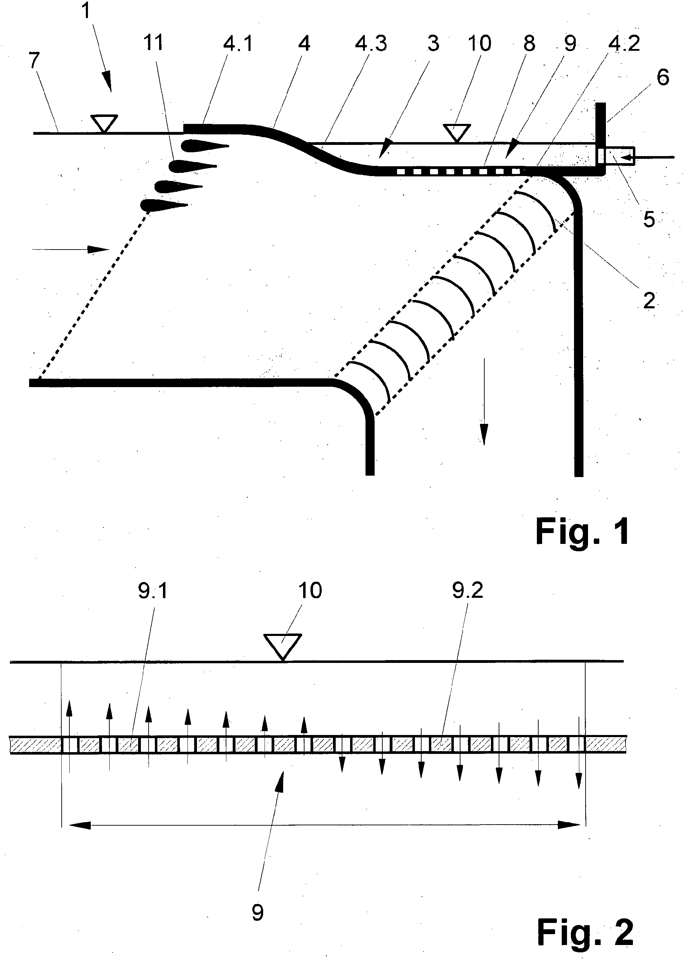

Die in der Messstrecke eines Wasserumlaufkanals 1 vor den Umlenkkrümmern 2 angeordnete Luftabscheidevorrichtung (Fig. 1) besteht im Wesentlichen aus einer Luftabscheidewanne 3 die aus einem Wasserleitelement 4, aus den Seitenwänden (nicht dargestellt) des Wasserumlaufkanals 1 und aus einer mit einem Wassereinlass 5 versehenen Rückwand 6 gebildet wird. Das Wasserleitelement besteht aus einem ersten ebenen Bereich 41. dessen Unterseite sich oberhalb des Wasserspiegels 7 der Hauptströmung der Messstrecke befindet, einem zweiten ebenen Bereich 4.2, der einen mit Durchbrüchen 8 versehenden Teilabschnitt 9 aufweist, und einem Übergangsbereich 4.3, der die ebenen Bereiche 4.1 und 4.2 miteinander verbindet. Das Wasserleitelement 4 besteht aus demselben Material wie der Wasserumlaufkanal und ist, z.B. mittels Verschweißens, Verklebens oder mittels Dichtungen, gasdicht mit den Wänden des Wasserumlaufkanals verbunden.

Zusammen mit den Seitenwänden des Wasserumlaufkanals 1 und der Unterseite des ebenen Bereichs 4.1 sowie der Unterseite des Übergangsbereichs 4.3 wird ein Kanal gebildet, der die Hauptströmung am Ende der Messstrecke nach unten lenkt. Entsprechend bildet die Oberseite des Übergangsbereichs 4.3 die vordere Wand der Luftabscheidewanne 3 und der zweite ebene Bereich 4.2 den Boden der Luftabscheidewanne 3.

Wie in Fig. 2 dargestellt, strömt Wasser mit einem hohen Gehalt an Luftblasen auf der der Messstrecke zugewandten Seite 9.1 des perforierten Abschnitts 9 durch die Durchbrüche 8 in die Luftabscheidewanne 3. Auf der der Messstrecke abgewandten Seite 9.2 des Abschnitts 9 strömt das nunmehr entgaste Wasser wieder in die Hauptströmung zurück. In der Luftabscheidewanne 3 hat das Wasser eine sehr kleine Geschwindigkeit, so dass dieses die Luft nahezu vollständig abgegeben kann. Durch das dynamische Zu- und Abströmen des Wassers bildet sich in der Luftabscheidewanne ein Wasserspiegel 10 aus, der bis 20 cm tiefer liegt, als der Wasserspiegel 7 in der Messstrecke (Hauptströmung).

Ist der Wasserspiegel 10 allerdings zu niedrig, wird im Bereich 9.2 nicht nur Wasser sondern auch wieder Luft in den Wasserumlaufkanal gesaugt. Bis zu Strömungsgeschwindigkeiten im Wasserumlaufkanal von 2 m/s kann durch eine entsprechende Dimensionierung der Luftabscheidewanne 3 sowie des perforierten Abschnitts 9 der Wasserspiegel 10 so hoch eingestellt werden, dass praktisch keine Luft in den Wasserumlaufkanal gelangt. Ab Strömungsgeschwindigkeiten von größer 2 m/s ist dies nicht mehr ohne weiteres möglich. Der Wasserspiegel kann jedoch durch Zuführen von zusätzlichem Wasser über den Wassereinlass 5 weiter erhöht werden, wodurch ein Ansaugen von Luft im Bereich 9.2 bis zu Strömungsgeschwindigkeiten von 2,5 m/s weitgehend verhindert wird.

In Strömungsrichtung vor der Luftabscheidewanne 3 sind Schutzprofile 11 angeordnet, die sich über die gesamte Breite des Wasserumlaufkanals erstrecken, maximal einen lichten Abstand von jeweils ca. 80 mm haben, zur Schwingungsdämpfung mit einer horizontalen Verstrebung versehen sind und einen tropfenförmigen Querschnitt aufweisen. In Strömungsrichtung sind die Schutzprofile beweglich und über Gummidämpfer abgestützt, um ggf. auf Personen wirkende Aufprallkräfte zu verkleinern.

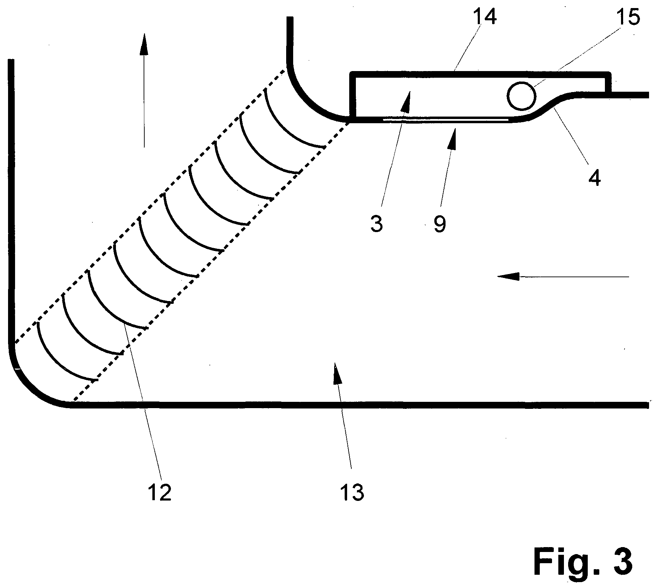

Die in Fig. 3 dargestellte Luftabscheidevorrichtung ist auf der Abströmseite des Rückströmkanals 13 vor den Umlenkkrümmern 12 des Wasserumlaufkanals 1 angeordnet und arbeitet in prinzipiell gleicher Weise wie die für die Messstrecke vorgesehene Luftabscheidevorrichtung. Da hier jedoch keine Luftabscheidewanne mit freier Wasseroberfläche eingesetzt werden kann, ist die Luftabscheidewanne 3 mit einer Abdeckung 14 verschlossen, wodurch aus der Luftabscheidewanne 3 eine Luftabscheidekammer wird. Die Luftabscheidekammer 3 ist mit einer Absaugöffnung 15 versehen, über die das in der Luftabscheidekammer 3 gebildete Wasser-Luft-Gemisch abgesaugt werden kann.

### Liste der verwendeten Bezugszeichen

- 1: Wasserumlaufkanal (Ausschnitt)
- 2: Umlenkschaufel/Umlenkkrümmer (Messstrecke)
- 3: Luftabscheidewanne/Luftabscheidekam mer
- 4: Wasserleitelement
- 4.1: erster ebener Bereich des Wasserleitelements
- 4.2: zweiter ebener Bereich des Wasserleitelements/Boden der Luftabscheidewanne
- 4.3: Übergangsbereich des Wasserleitelements
- 5: Wassereinlass
- 6: Rückwand der Luftabscheidewanne
- 7: Wasserspiegel in der Messstrecke
- 8: Durchbruch
- 9: perforierter Abschnitt des Bodens der Luftabscheidewanne
- 9.1: vorderer Teil des perforierten Abschnitts
- 9.2: hinterer Teil des perforierten Abschnitts
- 10: Wasserspiegel in der Luftabscheidewanne
- 11: Schutzprofil
- 12: Umlenkschaufel/Umlenkkrümmer (Rückströmkanal)
- 13: Rückströmkanal
- 14: Abdeckung
- 15: Absaugöffnung

## Patentansprüche

1. Luftabscheidevorrichtung für einen Wasserumlaufkanal (1), **dadurch gekennzeichnet, dass** sie ein Wasserleitelement (4), das sich über die gesamte Breite des Wasserumlaufkanals (1) erstreckt und dessen zu den Wänden des Wasserumlaufkanals gerichtete Seitenkanten gasdicht mit den Wänden des Wasserumlaufkanals verbunden sind, und eine Luftabscheidewanne (3) umfasst, wobei das Wasserleitelement (4) aus zwei ebenen Bereichen (4.1, 4.2) besteht, die parallel zum Wasserspiegel (7) im Umlaufkanal angeordnet sind und die durch einen Übergangsbereich (4.3) in Form einer Platte mit S-förmig gebogenem Profil miteinander verbunden sind, wobei sich die Unterkante des aus Sicht der Strömung ersten ebenen Bereichs (4.1) oberhalb des Wasserspiegels (7) der Hauptströmung und sich die Oberkante des zweiten ebenen Bereichs (4.2) unterhalb eines Wasserspiegels (10), der um bis zu 30 cm gegenüber dem Wasserspiegel der Hauptströmung (7) abgesenkt ist, befindet, wobei in Verbindung mit den Wänden des Wasserumlaufkanals der erste ebene Bereich (4.1) und der Übergangsbereich (4.3) einen geschlossenen Kanal formen, der die Hauptströmung des Wasserumlaufkanals (1) nach unten lenkt und eine Querschnittsverengung bewirkt, und durch den zweiten ebenen Bereich (4.2) der Boden, der zumindest in einem Teilabschnitt (9) mittels Durchbrüchen (8) perforiert ist, sowie durch den Übergangsbereich (4.3) die vordere Wand der Luftabscheidewanne (1) gebildet sind, wobei die Größe der Durchbrüche (8) und deren Anordnung derart gewählt sind, dass beim Betrieb des Wasserumlaufkanals (1) in einem stromaufwärts gelegenen, vorderen Teil (9.1) des perforierten Abschnitts (9) Wasser mit einem hohen Luftanteil aus dem Wasserumlaufkanal (1) nach oben in die Luftabscheidewanne (3) und in einem sich daran anschließenden, stromabwärts gelegenen, hinteren Teil (9.2) des perforierten Abschnitts (9) Wasser, dem Luft in der Luftabscheidewanne (3) entzogen wurde, nach unten zurück in den Hauptwasserstrom des Wasserumlaufkanals (1) gesaugt wird,
wobei die Länge des perforierten Abschnitts (9) des Bodens (4.2) der Luftabscheidewanne (3) in Strömungsrichtung so groß gewählt ist, dass der Volumenstrom des auf dem vorderen Teil (9.1) des Abschnitts (9) in die Luftabscheidewanne (3) gesaugten Wassers gleich dem Volumenstrom des auf dem hinteren Teil (9.2) aus der Luftabscheidewanne (3) strömenden Wassers ist, und sich ein Wasserspiegel (10) in der Luftabscheidewanne (3) einstellt, der ein Ansaugen von Luft über den perforierten Abschnitt (9) der Wanne (3) verhindert oder die Luftabscheidewanne über einen Wassereinlass (5) verfügt, über den zur Erhöhung des Wasserspiegels (10) so viel zusätzliches Wasser in die Luftabscheidewanne (3) geleitet werden kann, dass ein Ansaugen von Luft über den perforierten Abschnitt (9) bei Strömungsgeschwindigkeiten von 2,0 bis 2,5 m/s weitgehend verhindert wird.

2. Luftabscheidevorrichtung nach Patentanspruch 1, **dadurch gekennzeichnet, dass** die Krümmungsradien des Übergangsbereichs (4.3) 0,1 bis 1 m betragen.

3. Luftabscheidevorrichtung nach einem der Ansprüche 1 bis 2, **dadurch gekennzeichnet, dass** auf den Boden der Luftabscheidewanne ein perforiertes Blech oder eine perforierte Platte, die in ihrer Längsrichtung verschoben werden kann und die zur mechanischen Regulierung des Wasserspiegels in der Luftabscheidewanne dient, aufgelegt ist.

4. Luftabscheidevorrichtung nach einem der Ansprüche 1 bis 3, **dadurch gekennzeichnet, dass** die Durchbrüche (8) im Boden (4.2) der Luftabscheidewanne (3) die Form von Langlöchern aufweisen.

5. Luftabscheidevorrichtung nach einem der Ansprüche 1 bis 4, **dadurch gekennzeichnet, dass** in Strömungsrichtung vor der Luftabscheidewanne (3) Schutzprofile (11) angeordnet sind, wobei sich die Schutzprofile (11) über die gesamte Breite des Wasserumlaufkanals (1) erstrecken, einen lichten Abstand von maximal 80 mm haben und einen tropfenförmigen Querschnitt aufweisen.

6. Luftabscheidevorrichtung nach Anspruch 1 zur Verwendung im Rückströmkanal (13) des Wasserumlaufkanals (1), wobei die Luftabscheidewanne (3) mittels einer Abdeckung (14) verschlossen und mit einer Absaugöffnung (15) versehen ist, die zur Abführung des Wasser-Luft-Gemisches aus der verschlossenen Luftabscheidewanne (3) dient.

7. Luftabscheidevorrichtung nach einem der Ansprüche 1 bis 5 zur Verwendung auf der Abströmseite einer Messstrecke des Wasserumlaufkanals (1).

## Claims

1. An air separation device for a water circulation channel (1), **characterized in that** it comprises a water conducting element (4) that extends over the entire width of the water circulation channel (1) and whose lateral edges facing the walls of the water circulation channel are connected with the walls of the water circulation channel in a gas-tight manner, and an air separation tub (3), the water conducting element (4) consisting of two level areas (4.1, 4.2) that are arranged parallel to the surface of the water (7) in the circulation channel and that are connected with one another by a transition region (4.3) in the form of a plate whose profile is bent in an S-shape, the lower edge of the first level area (4.1) - considered first from the perspective of the flow - being located above the surface of the water or water level (7) of the main flow and the upper edge of the second level area (4.2) being located below a water level (10) that is lowered by up to 30 cm from the water level (7) of the main flow, the first level area (4.1) and the transition region (4.3) forming, together with the walls of the water circulation channel, a closed channel that directs the main flow of the water circulation channel (1) downward and causes a reduction in cross-sectional area, and the second level area (4.2) forming the bottom that is perforated, at least in a section (9), by openings (8), and the transition region (4.3) forming the front wall of the air separation tub (1), the size of the openings (8) and their arrangement being selected in such a way that during operation of the water circulation channel (1) water with a high proportion of air is sucked from the water circulation channel (1) in an upstream front part (9.1) of the perforated section (9) [and directed] upward into the air separation tub (3), and water from which air has been removed in the air separation tub (3) is sucked back down into the main water flow of the water circulation channel (1) in a following downstream rear part (9.2) of the perforated section (9),
the length, in the direction of flow, of the perforated section (9) of the bottom (4.2) of the air separation tub (3) being selected large enough that the volumetric flow rate of the water sucked into the air separation tub (3) at the front part (9.1) of section (9) is equal to the volumetric flow rate of the water flowing from the air separation tub (3) at the rear part (9.2) [of section (9)], and that a water level (10) results in the air separation tub (3) that prevents air being sucked in through the perforated section (9) of the tub (3); or
the air separation tub has a water inlet (5) which can direct enough additional water into the air separation tub (3) to increase the water level (10) so that the aspiration of air through the perforated section (9) is largely prevented at flow velocities of 2.0 to 2.5 m/s.

2. The air separation device described in claim 1, **characterized in that** the radii of curvature of the transition region (4.3) are 0.1 to 1 m.

3. The air separation device described in one of claims 1 through 2, **characterized in that** a perforated piece of sheet metal or a perforated plate that can be displaced in its longitudinal direction is laid on the bottom of the air separation tub, and serves for mechanical regulation of the water level in the air separation tub.

4. The air separation device described in one of claims 1 through 3, **characterized in that** the openings (8) in the bottom (4.2) of the air separation tub (3) have the shape of elongated holes.

5. The air separation device described in one of claims 1 through 4, **characterized in that** it has protective profiles (11) arranged in front of the air separation tub (3), in the direction of flow, the protective profiles (11) extending over the entire width of the water circulation channel (1) and having a maximum separation of 80 mm between them and a drop-shaped cross section.

6. The air separation device described in claim 1 for use in the back flow channel (13) of the water circulation channel (1), wherein the air separation tub (3) is closed by means of a cover (14) and has a suction opening (15) that removes the water-air mixture from the closed air separation tub (3).

7. The air separation device described in one of claims 1 through 5, for use on the outflow side of a measuring path of the water circulation channel (1).

## Revendications

1. Dispositif de séparation de l'air pour un canal de déviation d'eau (1), **caractérisé en ce qu'**il comprend un élément de guidage de l'eau (4), qui s'étend sur toute la largeur du canal de déviation d'eau (1) et dont les arêtes latérales orientées vers les bords du canal de déviation d'eau sont reliées de manière étanche aux gaz avec les bords du canal de déviation d'eau, et un bassin de séparation de l'air (3), où l'élément de guidage de l'eau (4) est constitué de deux domaines plans (4.1, 4.2) qui sont disposés parallèlement par rapport au niveau de l'eau (7) dans le canal de déviation et qui sont reliés ensemble par un domaine de transition (4.3) sous la forme d'une plaque avec un profil recourbé en forme de S, où l'arête inférieure du premier domaine plan (4.1), vue dans le sens de l'écoulement, se trouve au dessus du niveau de l'eau (7) de l'écoulement principal et l'arête supérieure du deuxième domaine plan (4.2) se situe en dessous d'un niveau de l'eau (10) qui est descendu jusqu'à environ 30 cm par rapport au niveau de l'eau de l'écoulement principal (7), où, en liaison avec les bords du canal de déviation de l'eau, le premier domaine plan (4.1) et le domaine de transition (4.3) forment un canal fermé, qui dirige l'écoulement principal du canal de déviation d'eau (1) vers le bas et provoque un rétrécissement de la section transversale, et le fond, qui est perforé sur au moins une portion partielle (9) au moyen de pontages de passage (8) est formé par le deuxième domaine plan (4.2), comme le bord frontal du bassin de séparation de l'air (1) est formé par le domaine de transition (4.3),
où la taille des pontages de passage (8) et leur agencement sont choisis de telle sorte que, lors du fonctionnement du canal de déviation d'eau (1) dans une partie frontale (9.1) de la portion perforée (9) située en amont, de l'eau avec une proportion d'air élevée est aspiré vers le haut dans le bassin de séparation de l'air (3) et de l'eau à laquelle on a enlevé de l'air dans le bassin de séparation d'air (3) est de nouveau aspirée vers le bas dans l'écoulement principal du canal de déviation d'eau (1) dans une partie arrière (9.2) lui succédant, située en aval, de la portion perforée (9),
où la longueur de la portion perforée (9) du fond (4.2) du bassin de séparation de l'air (3) dans le sens d'écoulement est choisie d'une longueur telle que le flux volumique de l'eau aspirée sur la partie frontale (9.1) de la portion (9) dans le bassin de séparation de l'air (3) est égal au flux volumique de l'eau s'écoulant de la partie arrière (9.2) du bassin de séparation de l'air (3), et qu'un niveau d'eau (10) s'établit dans le bassin de séparation de l'air (3) qui empêche une aspiration d'air par l'intermédiaire de la portion perforée (9) du bassin (3) ou
le bassin de séparation de l'air dispose d'une entrée d'eau (5) par laquelle autant d'eau supplémentaire peut être introduite dans le bassin de séparation de l'air (3) pour l'élévation du niveau de l'eau (10) que nécessaire pour qu'une aspiration de l'air puisse être largement empêchée par l'intermédiaire de la portion perforée (9) pour des vitesses d'écoulement de 2,0 à 2,5 m/s.

2. Dispositif de séparation de l'air selon la revendication 1, **caractérisé en ce que** les rayons de courbure du domaine de transition (4.3) se situent de 0,1 à 1 m.

3. Dispositif de séparation de l'air selon l'une des revendications 1 à 2, **caractérisé en ce qu'**une tôle perforée, ou une plaque perforée, qui peut être déplacée dans sa direction longitudinale et qui sert à la régulation mécanique du niveau de l'eau dans le bassin de séparation de l'air, peut être disposée sur le fond du bassin de séparation de l'air.

4. Dispositif de séparation de l'air selon l'une des revendications 1 à 3, **caractérisé en ce que** les pontages de passages (8) dans le fond (4.2) du bassin de séparation de l'air (3) présentent la forme de trous oblongs.

5. Dispositif de séparation de l'air selon l'une des revendications 1 à 4, **caractérisé en ce que**, dans la direction de l'écoulement, des profilés de protection (11) sont disposés avant le bassin de séparation de l'air (3), où les profilés de protection (11) s'étendent sur toute la largeur du canal de déviation de l'eau (1), ont une distance légère d'au maximum 80 mm et présentent une section transversale en forme de goutte.

6. Dispositif de séparation de l'air selon la revendication 1 pour l'utilisation dans le canal de refoulement (13) du canal de déviation de l'eau (1), où le bassin de séparation de l'air (3) est fermé au moyen d'un couvercle (14) et est muni d'un orifice d'aspiration (15) qui sert à l'évacuation du mélange eau et air à partir du bassin de séparation de l'air (3) fermé.

7. Dispositif de séparation de l'air selon l'une des revendications 1 à 5 pour l'utilisation sur le côté aval d'un parcours de mesure du canal de déviation de l'eau (1).
